# EUROPEAN PATENT APPLICATION

(11) **EP 1 755 243 A2**
(43) Date of publication of application: **21.02.2007**
(21) Application number: 06017271.5
(22) Date of filing: 18.08.2006
(51) Int. Cl.: H04H 1/00

(54) **Method and apparatus for decoding MPE-FEC frame in DVB-H system**

(30) Priority: 18.08.2005 KR 20050075731
(71) Applicant: Samsung Electronics Co., Ltd., Yeongtong-gu Suwon-si, Gyeonggi-do (KR)
(72) Inventor: Yoon, Jung-Wook, Yeongtong-gu Suwon-si Gyeonggi-do (KR); Ha, Ji-Won, Yeongtong-gu Suwon-si Gyeonggi-do (KR); Kim, Min-Goo, Yeongtong-gu Suwon-si Gyeonggi-do (KR); Oh, Hyun-Seok, Yeongtong-gu Suwon-si Gyeonggi-do (KR)
(74) Representative: Lang, Johannes

(57) **Abstract**

Provided is a method and apparatus for decoding a Multi-Protocol Encapsulation Forward Error Correction (MPE-FEC) frame in a Digital Video Broadcasting-Handheld (DVB-H) system. Packet Identifier (PID) filtering is performed on a Transport Stream (TS) packet received via a wireless network to detect a TS packet, and a table ID is detected from header information of the section data to identify the section data type. If the section data is an MPE section, frame buffering is performed. If there is a remaining portion in the data region after storage of an IP datagram of the last MPE section, zero-padding is performed on the remaining portion. If the section data is an MPE-FEC section, frame buffering is performed on parity data extracted from the MPE-FEC section.

## Description

### BACKGROUND OF THE INVENTION

### 1. Field of the Invention

The present invention generally relates to a method and apparatus for receiving data in a digital broadcasting system, and in particular, to a method and apparatus for decoding a Multi-Protocol Encapsulation-Forward Error Correction (MPE-FEC) frame in a receiver of a Digital Video Broadcasting-Handheld (DVB-H) system.

### 2. Description of the Related Art

Digital broadcasting capable of providing high-quality audio and video services to users has been implemented with the development of compression technology of audio and video data and communication technology. In general, digital broadcasting refers to a broadcasting service for providing high picture quality and Compact Disc (CD)-level sound quality services to users in place of conventional analog broadcasting. Such digital broadcasting includes terrestrial-wave broadcasting and satellite broadcasting. Terrestrial-wave broadcasting refers to a digital broadcasting scheme enabling users to receive broadcasting services through a terrestrial repeater. In contrast, satellite broadcasting refers to a digital broadcasting scheme in which digital broadcasting is received using a satellite as a repeater.

Examples of the digital broadcasting are Digital Audio Broadcasting (DAB), Digital Radio Broadcasting (DRS), a digital audio radio system, and a Digital Multimedia Broadcasting (DMB) system including audio, video and data services. Recently, much attention has been drawn to the European DAB system, i.e., Eureka 147 (European Research Coordination Agency project-147) system, and a Digital Video Broadcasting-Handheld (DVB-H) system that enforces mobility and portability of a DVB-Terrestrial (DVB-T) system that is one of digital broadcasting standards.

A physical layer standard of the DVB-H system complies with the specification of a conventional DVB-T system and supports an additional error correction coding technique such as Multi-Protocol Encapsulation-Forward Error Correction (MPE-FEC) to ensure stable reception while in motion. In the DVB-H system, broadcasting data is constructed with an internet protocol (IP) datagram, Reed-Solomon (RS) encoding is performed on the IP datagram and thus an MPE-FEC frame is generated. The MPE-FEC frame includes an MPE section carrying the IP datagram and an MPE-FEC section carrying parity data resulting from RS encoding. The MPE section and the MPE-FEC section are carried on a payload of a Transport Stream (TS) packet that is a unit of transmission in the DVB-H system and are transmitted through a physical layer.

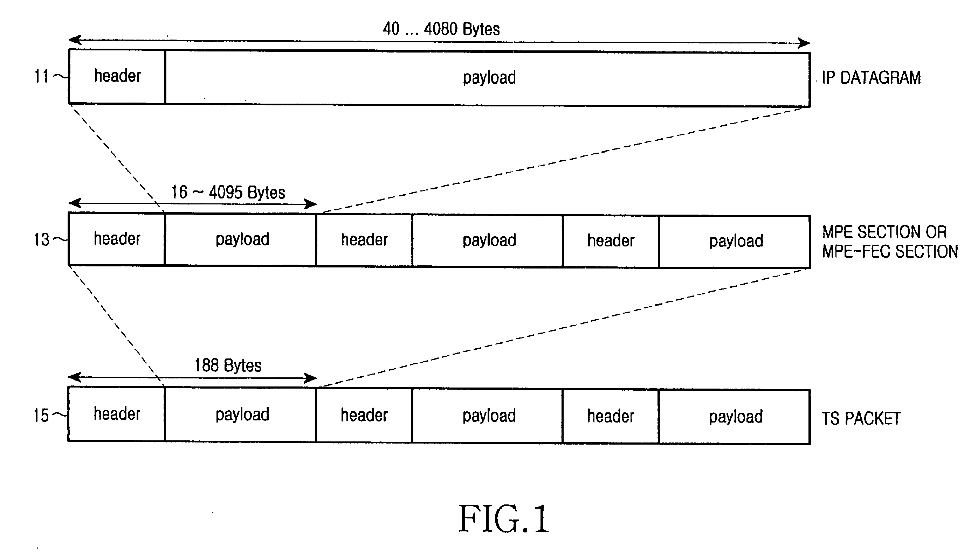

FIG. 1 illustrates a data structure of a TS packet in a conventional DVB-H system. Referring to FIG. 1, reference numeral 11 indicates an IP datagram carrying broadcasting data. The IP datagram 11 refers to a packet including address information about a network termination to which data is transmitted. Reference numeral 13 indicates an MPE section carrying the IP datagram 11 or an MPE-FEC section carrying parity data of the IP datagram 11. Reference numeral 15 indicates a TS packet carrying the MPE section 13 or the MPE-FEC section 13. Here, a single TS packet 15 may include a plurality of MPE sections 13 or MPE-FEC sections 13 or a single MPE section 13 or MPE-FEC section 13 may be transmitted through a plurality of TS packets 15.

As a result of MPE-FEC, RS encoding is performed on IP datagrams to generate an MPE-FEC frame. Data of the MPE-FEC frame is reconfigured as sections that are transmission units. A section header and Cyclic Redundancy Check (CRC) 32 bits are added to the IP datagram 11, and thus the IP datagram 11 is reconfigured as an MPE section. The section header and the CRC 32 bits are also added to the parity data resulting from RS encoding, and thus the parity data is reconfigured as an MPE-FEC section. The section header includes information required for MPE-FEC and time slicing and is positioned in front of each section. The CRC 32 bits are positioned at the rear of each section. These sections are carried on a payload of the TS packet 15 and are transmitted through a physical layer.

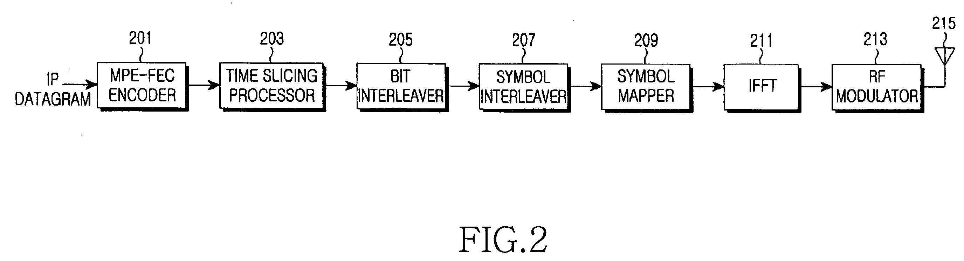

FIG. 2is a block diagram of a transmitter of a conventional DVB-H system. The DVB-H system of FIG. 1 broadcasts IP data to a plurality of users through broadcasting data and transmits RS parity data to the users for error correction of the broadcasting data.

In FIG. 2, an MPE-FEC encoder 201 generates an MPE section including an IP datagram to transmit the IP datagram provided as broadcasting data in units of sections and an MPE-FEC section including parity data for Forward Error Correction (FEC) of the MPE section. The parity data is generated by a well-known external encoding technique termed RS encoding. The output of the MPE-FEC encoder 201 is transmitted to a time slicing processor 203 for time divisional processing to burst broadcasting data. A single MPE-FEC frame is transmitted over a single burst period. The IP datagram undergoing time slicing is processed by High Priority (HP) stream processing and is converted into a serial/parallel signal according to a modulation order and a hierarchical or non-hierarchical transmission mode.

In FIG. 2, a bit interleaver 205 and a symbol interleaver 207 perform bit-based and symbol-based interleaving for transmission error dispersion. The interleaved signal undergoes symbol mapping by a symbol mapper 209 according to a modulation method such as Quadrature Phase Shift Keying (QPSK), 16 Quadrature Amplitude Modulation (QAM), or 64 QAM and then is transmitted to an Inverse Fast Fourier Transform (IFFT) 211. The IFFT 211 converts a frequency domain signal into a time domain signal. A guard interval is inserted into the IFFT processed signal by a guard interval insertion unit (not shown) to generate a baseband Orthogonal Frequency Divisional Multiplexing (OFDM) symbol. The OFDM symbol undergoes pulse-shaping by a digital baseband filter and is processed by an RF modulator 213, thus being transmitted as a TS packet that is a DVB-H signal via an antenna 215.

The receiver of the DVB-H system receives the TS packet through a physical layer and reconstructs the IP datagram including broadcasting data. Thus, the receiver requires an MPE-FEC decoding technique to separately extract the MPE section and the MPE-FEC section from the TS packet and configure the extracted data as an MPE-FEC frame for reconstruction of the IP datagram. A detailed standard for a transmission technique of the DVB-H system has been suggested, but a standard for a reception technique of the DVB-H system, such as MPE-FEC decoding, has not been proposed.

### SUMMARY OF THE INVENTION

It is, therefore, an object of the present invention to provide a method and apparatus for decoding an MPE-FEC frame in a DVB-H system to receive a TS packet and reconstruct an IP datagram that is broadcasting data.

According to the present invention, there is provided a method for decoding a Multi-Protocol Encapsulation Forward Error Correction (MPE-FEC) frame in a receiver of a Digital Video Broadcasting (DVB) system. The method includes performing Packet Identifier (PID) filtering on a Transport Stream (TS) packet received via a wireless network to detect a TS packet including section data of a Multi-Protocol Encapsulation (MPE) section or an MPE-FEC section, detecting a table ID from header information of the section data to identify the type of the section data, if the section data is an MPE section, performing frame buffering on an IP datagram extracted from the MPE section in a data region of a buffer, if there is a remaining portion in the data region after storage of an IP datagram of the last MPE section, performing zero-padding on the remaining portion, if the section data is an MPE-FEC section, performing frame buffering on parity data extracted from the MPE-FEC section, and performing Reed-Solomon (RS) decoding on the IP datagram using the parity data to output the error-corrected IP datagram.

According to the present invention, there is provided an apparatus for decoding an MPE-FEC frame in a receiver of a DVB system. The apparatus includes a buffer for storing an IP datagram of an MPE section extracted from a received TS packet in a data region and separately storing parity data of an MPE-FEC section in a parity region, an RS decoder for performing error correction of the IP datagram using the parity data, and a controller for performing PID filtering to detect the TS packet including section data, checking a table ID from header information of the MPE section and the MPE-FEC section, extracting the IP datagram and the parity data to store the same in the buffer, and if there is a remaining portion in the data region after storage of an IP datagram of the last MPE section, performing zero-padding on the remaining portion of the buffer, and performing RS decoding on the IP datagram and the zero-padded data through the RS decoder.

### BRIEF DESCRIPTION OF THE DRAWINGS

The above and other objects, features and advantages of the present invention will become more apparent from the following detailed description when taken in conjunction with the accompanying drawings in which:
FIG. 1 illustrates a data structure of a TS packet in a conventional DVB-H system;
FIG. 2 is a block diagram of a transmitter of a conventional DVB-H system;
FIG. 3 is a block diagram of a receiver of a DVB-H system according to the present invention;
FIG. 4 is a flowchart illustrating a method for decoding an MPE-FEC frame according to the present invention;
FIG. 5 is a block diagram of an apparatus for decoding an MPE-FEC frame according to the present invention;
FIGs. 6A through 6D are flowcharts illustrating in detail a method for decoding an MPE-FEC frame according to the present invention;
FIG. 7 is a data structure illustrating circular buffering in a method for decoding an MPE-FEC frame according to the present invention;
FIG. 8A is a view showing buffering of a frame buffer in a method for decoding an MPE-FEC frame according to the present invention; and
FIG. 8B is a view showing reliability information marking of an erasure buffer in a method for decoding an MPE-FEC frame according to the present invention.

### DETAILED DESCRIPTION OF THE PREFERRED EMBODIMENTS

Preferred embodiments of the present invention will now be described in detail with reference to the annexed drawings. In the following description, a detailed description of known functions and configurations incorporated herein has been omitted for the sake of clarity and conciseness.

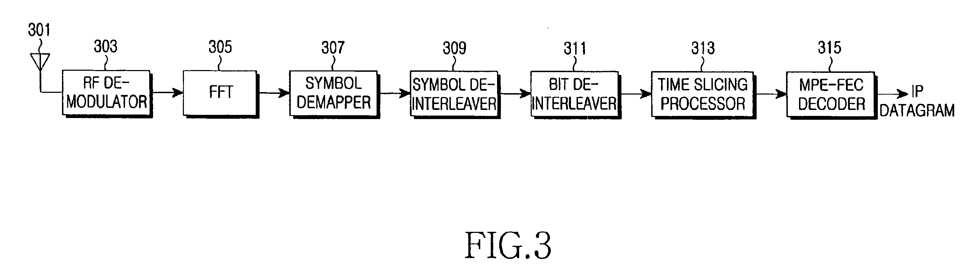

FIG. 3 is a block diagram of a receiver of a DVB-H system according to the present invention.

Referring to FIG. 3, a TS packet received from a wireless network is received by an RF demodulator 303 via an antenna 301 and OFDM symbols of the TS packet are frequency down-converted into a digital signal by the RF demodulator 303. The digital signal is converted into a frequency domain signal through Fast Fourier Transform (FFT) 305. A symbol demapper 307 performs symbol demapping on the received signal according to a modulation method such as QPSK, 16 QAM, or 64 QAM. A symbol deinterleaver 309 and a bit deinterleaver 311 perform symbol-based and bit-based deinterleaving to reconstruct the original signal. A time slicing processor 313 repeats a switching operation to receive a TS packet including an MPE-FEC frame in every burst period. Here, the burst period can be checked by receiving delta t information included in the section headers of an MPE section and an MPE-FEC section to indicate the start time of the next burst period.

An MPE-FEC decoder 315 performs PID filtering. Thus, if a PID of a packet determined to carry an MPE section or an MPE-FEC section is detected from header information of a TS packet, the MPE-FEC decoder 315 regards the MPE section or the MPE-FEC section as being received. If a PID of a packet determined to carry an MPE section or an MPE-FEC section is not detected, the MPE-FEC decoder 315 receives Program Specific Information/Service Information (PSI/SI), which will be referred to as broadcasting service information, from the TS packet to receive service information related to broadcasting reception, such as information about whether to apply time slicing and MPE-FEC. The MPE-FEC decoder 315 receiving the broadcasting service information (PSI/SI) separately stores an IP datagram of an MPE section and parity data of an MPE-FEC section in a data and parity region of an internal buffer and performs RS decoding to reconstruct the original broadcasting data.

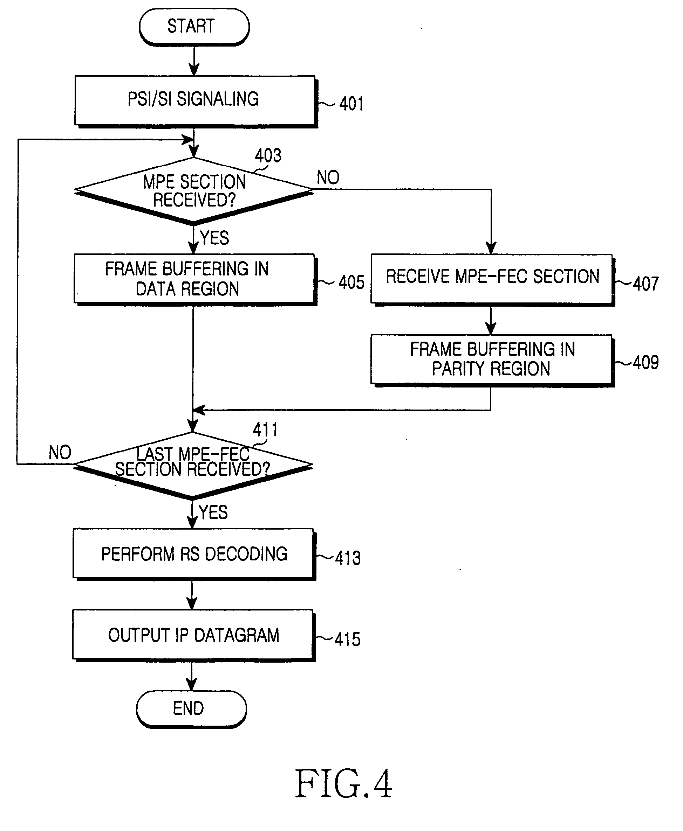

FIG. 4 is a flowchart illustrating a method for decoding an MPE-FEC frame according to the present invention. Steps of FIG. 4 are performed by the MPE-FEC decoder 315 of FIG. 3.

In step 401, the MPE-FEC decoder 315 performs PID filtering on a TS packet received from a physical layer demodulator to detect a TS packet carrying an MPE section or an MPE-FEC section and determines whether to apply time slicing and MPE-FEC for other packets regarded as including the broadcasting service information (PSI/SI). The present invention suggests a method for decoding an MPE-FEC frame, and thus it is assumed that MPE-FEC is applied in this description. After receiving the broadcasting service information (PSI/SI), if the MPE-FEC decoder 315 receives a TS packet including MPE-PID in header information, it regards data included in a payload of the TS packet as being an MPE section or an MPE-FEC section.

In step 403, the MPE-FEC decoder 315 checks a table ID from the header information of section data extracted from the TS packet to determine whether the section data is an MPE section including an IP datagram or an MPE-FEC section including parity data of the IP datagram. If the received section data is an MPE section, the MPE-FEC decoder 315 performs frame buffering on an IP datagram of a corresponding MPE section in the data region of the internal buffer. If the received section data is an MPE-FEC section, the MPE-FEC decoder 315 performs frame buffering on parity data of a corresponding MPE-FEC section in the parity region of the internal buffer.

In step 411, the MPE-FEC decoder 315 checks a real time parameter from the header information of the MPE-FEC section to determine whether a currently received MPE-FEC section is the last MPE-FEC section of an MPE-FEC frame. If the received MPE-FEC section is not the last MPE-FEC section, the MPE-FEC decoder 315 goes to step 403 to continue receiving an MPE section or an MPE-FEC section of the MPE-FEC frame and performing frame buffering. If the received MPE-FEC section is the last MPE-FEC section, the MPE-FEC decoder 315 performs RS decoding to correct an error of the IP datagram using the parity data stored in the internal buffer.

In step 415, the MPE-FEC decoder 315 outputs the error-corrected IP datagram to an upper layer and displays the IP datagram as broadcasting data through a user terminal.

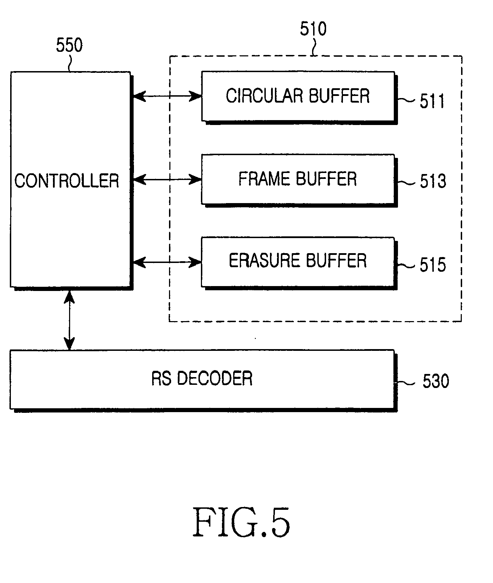

FIG. 5 is a block diagram of an apparatus for decoding an MPE-FEC frame according to the present invention. The apparatus corresponds to the MPE-FEC decoder 315 of FIG. 3.

The apparatus includes a buffer 510 for temporarily storing the IP datagram of the MPE section extracted from the received TS packet and the parity data of the MPE-FEC section extracted from the received TS packet, an RS decoder 530 for error correction of the IP datagram using the parity data, and a controller 550 for controlling the overall operation of the apparatus, such as analyzing the PSI/SI transmitted from a transmitter through a physical layer to determine whether to apply MPE-FEC, extracting the IP datagram and the parity data from the MPE section and the MPE-FEC section to store the extracted IP datagram and parity data in the buffer 510, and performing RS decoding of the IP datagram through the RS decoder 530.

In FIG. 5, the buffer 510 includes a circular buffer 511 for performing CRC on the MPE section and the MPE-FEC section, a frame buffer 513 for separately storing the IP datagram of the MPE section and the parity data of the MPE-FEC section for RS decoding, and an erasure buffer 515 for marking reliability information regarding the IP datagram and the parity data according to the CRC result. Upon receipt of the TS packet, the controller 550 analyzes the broadcasting information to determine whether to apply MPE-FEC and stores the MPE section or the MPE-FEC section remaining after removing header information from the TS packet in the circular buffer 511 to perform CRC.

If the CRC result is 'GOOD', the controller 550 checks header information of corresponding section data to store a payload (IP datagram) of the MPE section in a data region of the frame buffer 513 and a payload (parity data) of the MPE-FEC section in a parity region of the frame buffer 513. According to the CRC result, the controller 550 marks normal or abnormal reception of the IP datagram and the parity data as reliability information in the erasure buffer 515, performs RS decoding on the IP datagram having a reception error through the RS decoder 530 using the parity data, and outputs the error-corrected IP datagram to an upper layer.

If reliability information is marked in all the regions of the erasure buffer 515 (i.e., all the IP datagrams of the MPE-FEC frame are received normally), the controller 550 skips RS decoding.

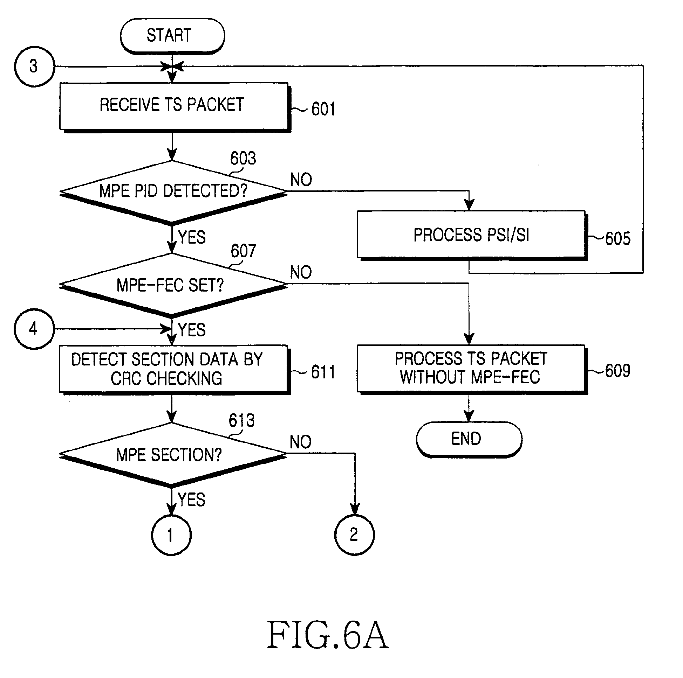

FIGs. 6A through 6D are flowcharts illustrating a method for decoding an MPE-FEC frame according to the present invention.

Referring to FIG. 6A, the controller 550 of FIG. 5 receives a TS packet from a physical layer in step 601 and performs PID filtering on the received TS packet in step 603. If an MPE PID of a TS packet carrying an MPE section or an MPE-FEC section is not detected as a result of PID filtering, the controller 550 regards the received TS packet as a packet carrying PSI/SI and analyzing PSI/SI to determine whether to apply time slicing and MPE-FEC in step 605. The controller 550 goes to step 601 to receive the next TS packet. If an MPE PID is detected from the received TS packet, the controller 550 regards the received packet as a packet carrying an MPE section or an MPE-FEC section and goes to step 607.

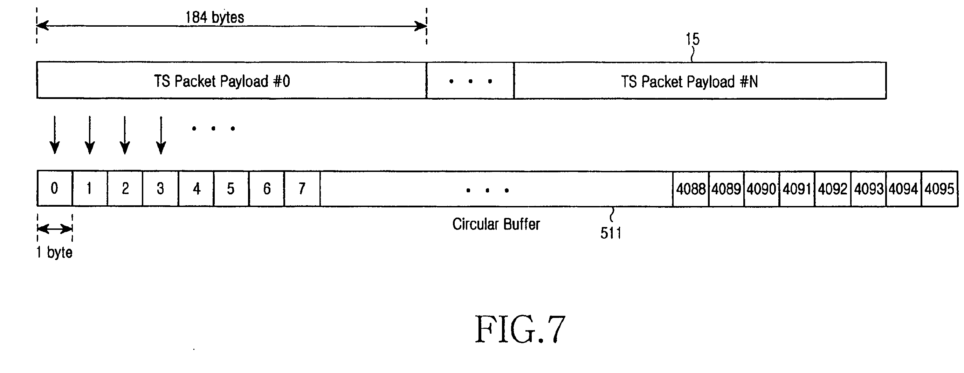

In step 607, if the controller 550 determines not to apply MPE-FEC as a result of analyzing the PSI/SI, it proceeds to step 609 to receive only an MPE section from the TS packet. If the controller 550 determines to apply MPE-FEC in step 607, it proceeds to step 611 to remove a 4-byte header from the TS packet as shown in FIG. 7 and sequentially store a payload 15 of 184 bytes in the circular buffer 511 of FIG. 5 in units of bytes. The object of circular buffering is to perform CRC on a currently received MPE section or MPE-FEC section and store received data until a payload of a section including an IP datagram or parity data is transmitted to the frame buffer 513. If the last address of the circular buffer 511 is filled with data, the next storage position is the "0" address.

In step 611, the controller 550 checks the start and end of the MPE section or MPE-FEC section transmitted through a payload of the TS packet and performs CRC checking whenever a table ID to be described below is detected in order to acquire reliability information for performing RS decoding on an MPE-FEC frame including the MPE section and the MPE-FEC section. This process is called section detection. When the MPE section or the MPE-FEC section is transmitted, CRC 32 bits are added at the end of each section. In the present invention, if CRC 'GOOD' is generated, the controller 550 regards a check interval having CRC 'GOOD' as having at least one MPE section or MPE-FEC section and extracts information required for decoding of the MPE-FEC frame from header information of corresponding section.

The start and end of the MPE section or MPE-FEC section are checked through CRC checking and correspond to an interval during which a CRC checker (not shown) operates. The interval can be checked using a section length.

Table 1 shows information required for MPE-FEC frame decoding among header information extracted from the MPE section or the MPE-FEC section.

**Table 1**

| Header Information | Contents |
|---|---|
| table_id | Indicate type of MPE section or MPE-FEC section |
| section_length | Indicate section length from fourth byte of section to the end of section including CRC 32 bits |
| padding_columns | Indicate number of zero-padded columns in data region of MPE-FEC frame (0 - 190) |
| table_boundary | Indicate that current section is last section in data region or parity region of MPE-FEC frame (if set as '1') |
| address | Indicate position of first byte of payload of currently received section in each region of MPE-FEC frame |

The controller 550 includes at least one CRC checker (not shown). The controller 550 may perform multiple CRC checking by assigning a new CRC checker whenever a table ID is detected until the result of CRC checking is 'GOOD'. After the controller 550 extracts header information of the section data detected in step 611, it compares a CRC checking interval of the CRC checker indicating CRC 'GOOD' with the section length of header information shown in Table 1. If the CRC checking interval and the section length are equal, the controller 550 determines that the currently received section is received normally. Such an operation of the controller 550 is intended for more accurate section detection and may be performed selectively.

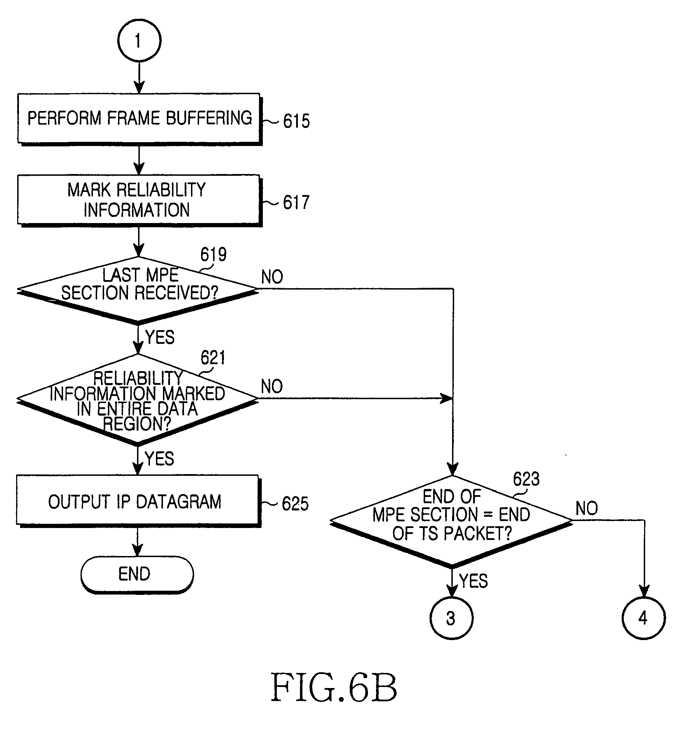

After completion of section detection in step 611, the controller 550 reads a table ID of Table 1 from header information of the detected section to determine whether the detected section is an MPE section or MPE-FEC section in step 613. If the detected section is determined to be an MPE section in step 613, the controller 550 proceeds to step 615 of FIG. 6B to remove header information and CRC bits from the MPE section and performs frame buffering on an IP datagram of the MPE section in a data region of the frame buffer 513. Since the frame-buffered IP datagram is reliable data that undergoes CRC checking, the controller 550 marks reliability information regarding bytes of the IP datagram on the erasure buffer 515.

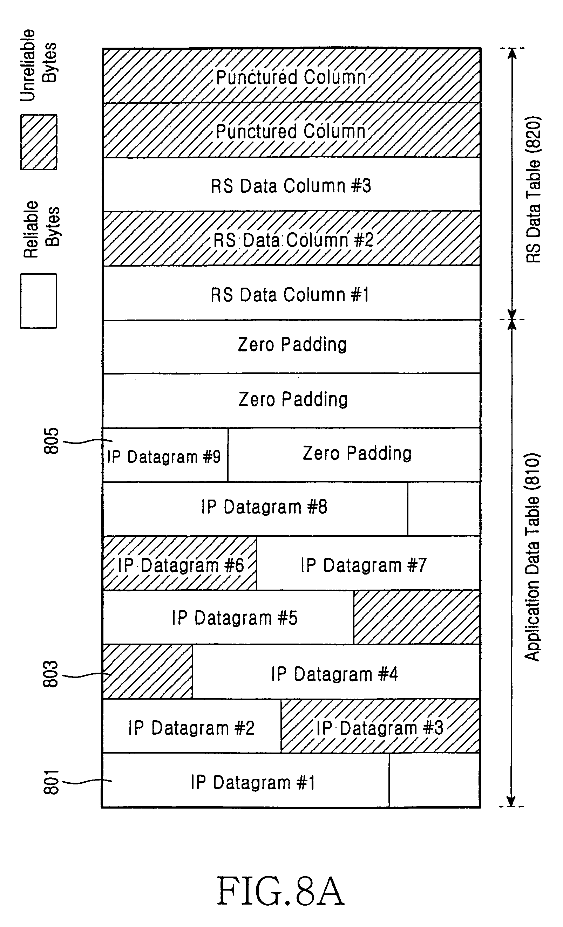

FIG. 8A is a view showing buffering of the frame buffer 513 according to the present invention. As shown in FIG. 8A, the frame buffer 513 includes a data region (application data table) 810 for storing an IP datagram provided as broadcasting data and a parity region (RS data table) 820 for storing parity data for RS decoding of the IP datagram. Thus, for example, if the controller 550 detects an MPE section having a table ID '0x3e' from header information, a payload of the MPE section is stored in the data region 810. If the controller 550 detects an MPE-FEC section having a table ID '0x78', a payload of the MPE-FEC section is stored in the parity region 820.

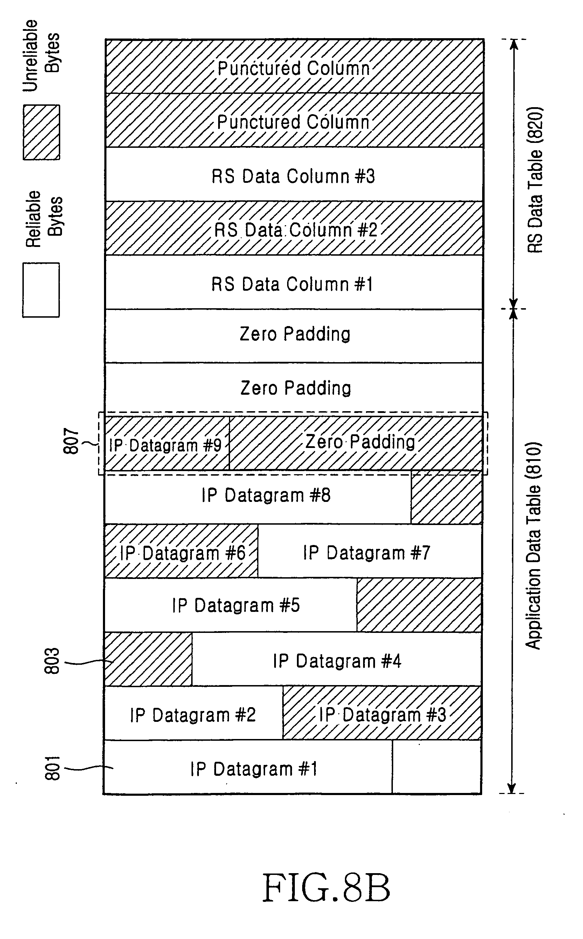

FIG. 8B is a view for explaining reliability information marking of the erasure buffer 515 according to the present invention. As shown in FIG. 8B, the erasure buffer 515 has a structure corresponding to the frame buffer 513, including a data region (application data table) 810 in which reliability information of an IP datagram is stored (marked) and a parity region (RS data table) 820 in which reliability information of parity data is stored (marked).

In FIGs. 8A and 8B, non-dashed portions 801 indicate data marked with reliability information CRC 'GOOD' and dashed portions 803 indicate unreliable bytes that are not marked with reliability information. In the data region 810 and the parity region 820, a data storage address is independently determined and a buffer address in which a payload of each section is to be stored is indicated by address information (address) of Table 1, which can be acquired during extraction of header information.

Returning to FIG. 6B, after marking reliability information in the erasure buffer 515 in step 617, the controller 550 checks table boundary information (table_boundary) from header information of the MPE section to determine whether the currently received MPE section is the last MPE section that fills the data region 810 of FIG. 8A in step 619. If the table boundary information is set to '0', the controller 550 determines that the currently received MPE section is not the last MPE section and goes to step 623 to check whether the end of the MPE section matches with the end of the TS packet. Since the length of the TS packet is fixed to 188 bytes, the end of the TS packet can be checked by counting the number of received bytes. If the end of the MPE section equals the end of the TS packet, the controller 550 goes to step 601 to receive the next TS packet. Unless the end of the MPE section equals the end of the TS packet, the controller 550 goes to step 611 to detect the next MPE section or MPE-FEC section from the currently received TS packet.

The currently received MPE section may not be the last MPE section, but may be the end of the TS packet in steps 619 and 623 because the MPE section or the MPE-FEC section may be transmitted through a plurality of TS packets if the amount of MPE section or MPE-FEC section is large as described with reference to FIG. 1. For example, if the table boundary information is set to '1' in step 619, the controller 550 determines that the currently received MPE section is the last MPE section and checks reliability information of the erasure buffer 515 in step 621 to determine whether reliability information of all the IP datagrams is marked in the data region 810.

If reliability information of all the IP datagrams is marked in the data region 810, it indicates that all the IP datagrams in the data region 810 are received normally. Thus, the controller 550 skips RS decoding for error correction and outputs the IP datagrams of the frame buffer 513 to an upper layer in step 625. If reliability information of at least one IP datagram is not marked in the data region 810, the controller 550 returns to 601 through step 623 to receive the next TS packet or goes to step 613 to receive an MPE-FEC section for RS decoding.

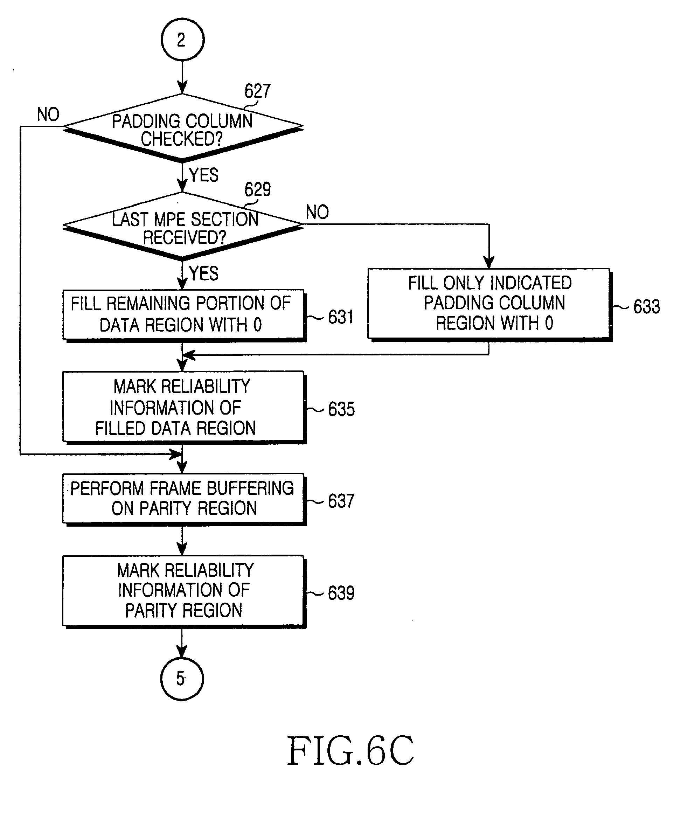

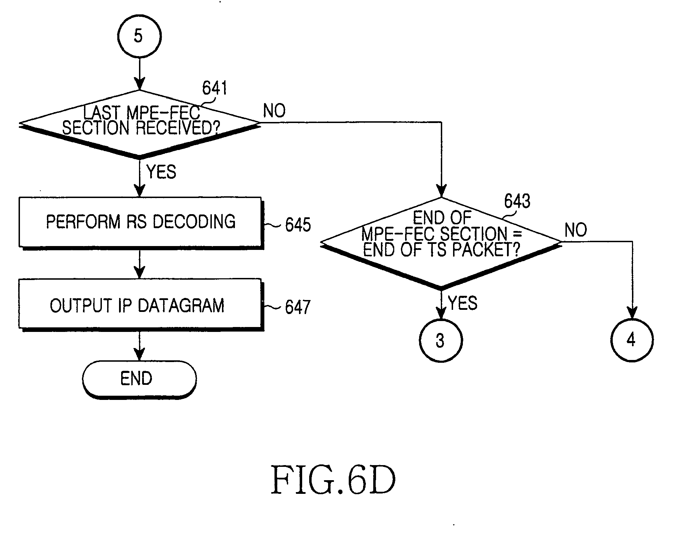

As described above, the apparatus for decoding an MPE-FEC frame receives an MPE section. Hereinafter, RS decoding of the MPE section will be described in detail with reference to FIGs. 6C and 6D.

In step 613 of FIG. 6A, the controller 550 checks the table ID of Table 1 from header information of a section. If the detected section is an MPE-FEC section, the controller 550 goes to step 627 of FIG. 6C to check padding column number information (padding_columns) from header information of the MPE-FEC section and check a portion of the data region 810 to be filled with '0' instead of data. In other words, the data region 810 may be transmitted from a transmission side without being completely filled with IP datagrams. In this case, the data region 810 that is not completely filled with the IP datagrams is filled with '0' byte (hereinafter zero padding), undergoes RS encoding, and is not actually transmitted.

Thus, in order for a reception side to accurately decode an MPE-FEC frame, a padding column portion that is not transmitted should be zero-padded before RS decoding. The number of zero-padded portions is indicated in units of columns and the controller 550 checks the padding column number information (paddig_columns) for zero padding. The controller 550 performs padding column processing for when an IP datagram (IP datagram #9 of FIG. 8A) 805 of the last MPE section transmitted from the transmission side is received normally, and when the IP datagram 805 of the last MPE section is not received normally. In the present invention, FIG. 8A corresponds to the first case and FIG. 8B corresponds to the second case.

In the first case, the controller 550 proceeds to step 631 to perform zero-padding on the remaining portion of the data region 810 after storage of the IP datagram of the last MPE section and marks reliability information in a corresponding position of the erasure buffer 515. In the second case, since the last MPE section is not received normally and thus a start byte for zero padding cannot be determined, the controller 550 proceeds to step 633 to perform zero-padding on bytes corresponding to the number of padding columns indicated by the padding column number information (padding_columns) except for columns 807 of FIG. 8B and mark the zero-padded portions with reliability information. In FIG. 8B, the number of padding columns is 2.

In initial setting, the erasure buffer 515 of FIG. 5 is not marked with reliability information and its entire region is set to a non-dashed region, i.e., unreliable bytes. Thus, separate reliability information marking is not required for unreliable bytes that do not have 'GOOD' as the CRC result.

If padding column processing and reliability information marking are performed on the currently received MPE-FEC section in steps 627 through 633 or the padding column number information (padding_columns) is not checked in step 627, the controller 550 proceeds to step 635 to extract parity data from the MPE-FEC section, performs frame buffering on the parity region 820 of FIG. 8A, and marks reliability information of the parity region 820 using the CRC result of step 611 in step 639.

In FIG. 6D, the controller 550 checks the table boundary information (table_boundary) from the header information of the current MPE-FEC section to determine whether the MPE-FEC section is the last MPE-FEC section that fills the parity region 820 of FIG. 8A in step 641. For example, if the table boundary information is set to '0', the controller 550 determines that the current MPE-FEC section is not the last MPE-FEC section and goes to step 643 to check whether the end of the MPE-FEC section equals the end of the TS packet. If the end of the MPE-FEC section equals the end of the TS packet, the controller 550 returns to step 601 to receive the next TS packet. Unless the end of the MPE-FEC section equals the end of the TS packet, the controller 550 goes to step 611 to detect the next MPE section or MPE-FEC section from the currently received TS packet.

However, if the table boundary information is set to '1', the controller 550 determines that the current MPE-FEC section is the last MPE-FEC section and proceeds to step 645 to perform RS decoding on IP datagrams of the data region 810 using the parity data of the parity region 820 and output the error-corrected IP datagrams to an upper layer in step 647.

As described above, according to the present invention, for MPE-FEC frame decoding in a receiver of a DVB-H system, an MPE section and an MPE-FEC section are separately detected from a TS packet and the detected MPE section and MPE-FEC section are buffered and undergo RS decoding, thereby reconstructing an IP datagram as broadcasting data.

While the present invention has been shown and described with reference to preferred embodiments thereof, it will be understood by those skilled in the art that various changes in form and details may be made therein without departing from the spirit and scope of the invention.

## Claims

1. A method for decoding a Multi-Protocol Encapsulation Forward Error Correction (MPE-FEC) frame in a receiver of a Digital Video Broadcasting (DVB) system, the method comprising the steps of:
performing Packet Identifier (PID) filtering on a Transport Stream (TS) packet received via a wireless network to detect a TS packet including section data of a Multi-Protocol Encapsulation (MPE) section or an MPE-FEC section;
detecting a table ID from header information of the section data to identify the type of the section data;
performing frame buffering on an IP datagram extracted from the MPE section in a data region of a buffer if the section data is an MPE section;
performing zero-padding on a remaining portion in the data region if there is a remaining portion in the data region after storage of an IP datagram of the last MPE section;
performing frame buffering on parity data extracted from the MPE-FEC section if the section data is an MPE-FEC section; and
performing Reed-Solomon (RS) decoding on the IP datagram using the parity data to output the error-corrected IP datagram.

2. The method of claim 1, wherein if the PID corresponding to the section data is not detected as a result of the PID filtering during the detection of the TS packet, broadcasting service information included in the TS packet is analyzed to determine whether to apply MPE-FEC.

3. The method of claim 1, further comprising performing Cyclic Redundancy Check (CRC) checking on a payload of a corresponding section if the table ID is detected.

4. The method of claim 3, wherein the CRC checking is performed by at least one CRC checker assigned at every detection of the table ID until the CRC result indicates normal.

5. The method of claim 3, wherein the frame buffering is performed on section data having the CRC result indicating normal.

6. The method of claim 5, further comprising marking reliability information of section data having the CRC result indicating normal in an internal buffer.

7. The method of claim 6, further comprising outputting IP datagrams to a upper layer without the RS decoding on the IP datagrams if reliability information of all the IP datagrams of an MPE-FEC frame is marked.

8. The method of claim 1, wherein further comprising performing circular buffering for Cyclic Redundancy Check (CRC) checking on a payload of the MPE section and a payload of the MPE-FEC section prior to performing the frame buffering.

9. The method of claim 1, wherein data of the zero-padded portion of the data region is directly filled with '0' without being received by the receiver.

10. The method of claim 9, further comprising performing zero padding only on padding columns checked from header information of the MPE-FEC section in the data region if the last MPE section is not checked.

11. An apparatus for decoding a Multi-Protocol Encapsulation Forward Error Correction (MPE-FEC) frame in a receiver of a Digital Video Broadcasting (DVB) system, the apparatus comprising:
a buffer for storing an IP datagram of a Multi-Protocol Encapsulation (MPE) section extracted from a received Transport Stream (TS) packet in a data region and separately storing parity data of an MPE-FEC section in a parity region;
a Reed-Solomon (RS) decoder for performing error correction of the IP datagram using the parity data; and
a controller for performing Packet Identifier (PID) filtering to detect the TS packet including section data, checking a table ID from header information of the MPE section and the MPE-FEC section, extracting the IP datagram and the parity data to store the same in the buffer, and if there is a remaining portion in the data region after storage of an IP datagram of the last MPE section, performing zero-padding on the remaining portion of the buffer, and performing RS decoding on the IP datagram and the zero-padded data through the RS decoder.

12. The apparatus of claim 11, wherein the buffer comprises:
a circular buffer for performing Cyclic Redundancy Check (CRC) checking on a payload of the MPE section and a payload of the MPE-FEC section; and
a frame buffer for separately storing the IP datagram of the MPE section and the parity data of the MPE-FEC section and performing RS decoding.

13. The apparatus of claim 11, wherein the controller analyzes broadcasting service information included in the TS packet to determine whether to apply MPE-FEC if the PID corresponding to the section data is not detected as a result of the PID filtering.

14. The apparatus of claim 11, wherein the controller performs Cyclic Redundancy Check (CRC) checking on a payload of a corresponding section if the table ID is detected.

15. The apparatus of claim 14, wherein the controller includes at least one CRC checker, additionally assigns a CRC checker at every detection of the table ID, and performs CRC checking until the CRC result indicates normal.

16. The apparatus of claim 14, wherein the controller stores only section data having the CRC result indicating normal in the buffer.

17. The apparatus of claim 16, wherein the buffer further comprises a reliability buffer for marking reliability information according to the CRC result and the controller marks reliability information of the section data having the CRC result indicating normal in the reliability buffer.

18. The apparatus of claim 17, wherein the controller outputs IP datagrams to a upper layer without the RS decoding on the IP datagrams if reliability information of all the IP datagrams of an MPE-FEC frame is marked.

19. The apparatus of claim 11, wherein the controller directly fills data of the zero-padded portion of the data region with '0'.

20. The apparatus of claim 19, wherein the controller performs zero padding only on padding columns checked from header information of the MPE-FEC section in the data region if the last MPE section is not checked.
